# EUROPÄISCHE PATENTSCHRIFT

(11) **EP 2 400 387 B1**
(45) Veröffentlichungstag und Bekanntmachung des Hinweises auf die Patenterteilung: **13.03.2013**
(21) Anmeldenummer: 10167361.4
(22) Anmeldetag: 25.06.2010
(51) Int. Cl.: G06F 9/445

(54) **Verfahren zur Performanceverbesserung von Computern**
Method for improving the performance of computers
Procédé d'amélioration de la performance d'ordinateurs

(43) Veröffentlichungstag der Anmeldung: 28.12.2011
(73) Patentinhaber: AVG Netherlands B.V., 1043 GL Amsterdam (NL)
(72) Erfinder: Schiemann, Tibor, 64297, Darmstadt (DE)
(74) Vertreter: Kailuweit & Uhlemann Patentanwälte

(56) Entgegenhaltungen:
- EP-A2- 1 605 332
- US-A1- 2008 209 557
- Anonymous: "Ashampoo StartUp Tuner 2.00", , 6. Juni 2007 (2007-06-06), Seiten 1-2, XP002609498, Gefunden im Internet: URL:http://www.softpedia.com/get/Tweak/Sys tem-Tweak/Ashampoo-StartUp-Tuner.shtml [gefunden am 2010-11-15]
- Anonymous: "Ashmapoo StartUp Tuner 2", , 5. Juni 2007 (2007-06-05), Seiten 1-3, XP002609499, Gefunden im Internet: URL:http://www.ashampoo.com/frontend_image s/1/products/0117/en/startup_tuner_2_en_AU D.pdf [gefunden am 2010-11-15]
- Anonymous: "How to identify programs that slows down your computer during startup", , 9. Juli 2007 (2007-07-09), Seiten 1-4, XP002609500, Gefunden im Internet: URL:http://www.watchingthenet.com/how-to-i dentify-programs-that-slows-down-your-comp uter-during-startup.html [gefunden am 2010-11-15]
- Anonymous: "Editor's Review - Ashampoo StartUp Tuner 2", , 6. Juni 2007 (2007-06-06), Seiten 1-2, XP002609501, Gefunden im Internet: URL:http://www.soft32.com/download_203933. html [gefunden am 2010-11-15]

## Beschreibung

Die Erfindung betrifft ein Verfahren zur Verbesserung der Performance eines Computersystems, bei dem durch automatische oder vom Nutzer veranlasste Deaktivierung von selbststartenden oder im Hintergrund laufenden, jedoch nicht systemrelevanten oder genutzten Programmen oder Programmteilen Ressourcen, wie Hauptspeicherplatz oder Rechenzeit freigegeben werden. Diese Ressourcen stehen dann für die tatsächlich in Nutzung befindlichen Programme oder Programmteile zur Verfügung.

Im Folgenden wird Performance als Leistungsfähigkeit eines Computersystems angesehen. Der Benutzer registriert die Leistungsfähigkeit insbesondere durch die Geschwindigkeit, mit der Programme und Änderungen des Betriebszustandes wie Hochfahren, Herunterfahren, Neustart und Ruhezustand abgearbeitet werden.

Die Verarbeitungsleistung eines Computers ist begrenzt und hängt von der Hardware ab (z.B. von der Rechenleistung des Prozessors, der Größe und Geschwindigkeit des physikalischen Arbeitsspeichers und der Lese-/Schreibgeschwindigkeit der Festplatte). Die zur Verfügung stehende Verarbeitungsleistung der Hardware muss zwischen allen auf dem Computer laufenden Programmen aufgeteilt werden - eine Aufgabe, die "Multitasking" genannt wird und von modernen Betriebssystemen wie Microsoft Windows übernommen wird. Je mehr Programme die Verarbeitungsleistung gleichzeitig beanspruchen, desto kleiner wird der Anteil der Verarbeitungsleistung, der jedem einzelnen Programm zur Verfügung steht, und desto länger benötigt der Computer in Folge dessen, um auf Eingaben in einem bestimmten Programm zu reagieren und Befehle abzuarbeiten.

Wenn die auf einem Computer installierten Programme die Verarbeitungsleistung nur dann beanspruchen könnten, wenn der Benutzer diese Programme startet und verwendet, dürfte die Anzahl an installierten Programmen keinen Einfluss auf die Geschwindigkeit eines Computers haben. In der Realität zeigt sich allerdings, dass es eine Beziehung zwischen der Anzahl installierter Programme und der Geschwindigkeit gibt, in der ein Computer reagiert und arbeitet.

Der Grund hierfür ist, dass Betriebssysteme wie Microsoft Windows es Programmen ermöglichen, sich an bestimmten Erweiterungspunkten EP in die Abläufe des Systems einzuklinken. Viele Programme registrieren sich während ihrer Installation bei einem oder mehreren dieser Erweiterungspunkte EP, um bei bestimmten Ereignissen vom Betriebssystem automatisch gestartet zu werden, ohne dass der Benutzer sie von Hand starten muss ("Autostart"). Die auf diese Weise automatisch gestarteten Teile eines Programms laufen häufig auch im Hintergrund weiter, um dem Benutzer oder dem Programm bestimmte Funktionalitäten zur Verfügung zu stellen ("Hintergrund-Funktionalitäten").

Programme, die sich für den Autostart bei einem oder mehreren Erweiterungspunkten EP registriert haben, beanspruchen in Folge dessen ohne weiteres Zutun des Benutzers (und häufig auch ohne Kenntnis des Benutzers) die begrenzten Leistungsressourcen des Computers.

Dabei sind folgende Zusammenhänge zu beobachten:
a) Je mehr Programme sich für einen Autostart während des Systemstarts registriert haben, desto länger dauert der Systemstart.
b) Je mehr Hintergrund-Funktionalitäten während des Betriebs auf dem Computer laufen, desto weniger Leistung steht für den Benutzer und seine aktuell verwendeten Programme zur Verfügung.
c) Je mehr Hintergrund-Funktionalitäten zu dem Zeitpunkt laufen, zu dem der Benutzer den Befehl zum Herunterfahren des Computers erteilt, desto länger dauert das Herunterfahren, da die laufenden Hintergrund-Funktionalitäten vorher beendet werden müssen.
d) Je mehr Hintergrund-Funktionalitäten zu dem Zeitpunkt laufen, zu dem der Benutzer den Befehl zum Wechsel in den Ruhezustand erteilt, desto länger dauert das Eintreten in den Ruhezustand, da der Zustand der laufenden Hintergrund-Funktionalitäten vom Arbeitsspeicher auf die Festplatte übertragen werden muss.
e) Je mehr Hintergrund-Funktionalitäten zu dem Zeitpunkt aktiv waren, zu dem der Computer in den Ruhezustand versetzt wurde, umso länger dauert die Rückübertragung des Systemzustandes von der Festplatte in den Arbeitsspeicher.

Viele Computer werden bereits vom Hersteller mit einer Vielzahl von vorinstallierten Programmen ("OEM-Software") ausgeliefert, was in der Regel dazu führt, dass schon im Auslieferungszustand zahlreiche Autostarts registriert sind und zahlreiche Hintergrund-Funktionalitäten laufen. Die Verarbeitungsleistung dieser Computer ist also schon zu Beginn entsprechend stärker beansprucht und der Käufer kann die volle Leistungsfähigkeit seiner Hardware nicht ausnutzen.

Zudem installieren die meisten Benutzer mit der Zeit weitere Programme auf ihrem Computer, was wiederum dazu führt, dass die Leistungsressourcen zusätzlich beansprucht werden, wenn diese Programme Autostarts registrieren und Hintergrund-Funktionalitäten bereitstellen. Für technisch wenig versierte Benutzer entsteht so der Eindruck, dass die Leistung ihres Computers mit der Zeit immer mehr nachlässt.

Bisher wurden diese Probleme auf unterschiedlichen Wegen gelöst. So wurde häufig neue Hardware beschafft, weil der Nutzer von einer nicht mehr ausreichenden Hardwareleistung des vorhandenen Systems ausging. Regelmäßig wurde das Betriebssystem neu installiert, wobei ein Teil der vom Hardwarehersteller vorinstallierten Programme weggelassen und so eine Beschleunigung des Systems erreicht wurde. Als weitere Möglichkeit bietet sich an, nicht benötigte Programme zu deinstallieren. Dies geschieht vorteilhaft unter Nutzung der vom Betriebssystem und den Programmherstellern bereitgestellten Deinstallationsroutinen [für Windows: Punkt "Software", "Programme hinzufügen oder entfernen" oder "Programme und Funktionen" (je nach Windows-Version) in der Systemsteuerung]. Teilweise kommt auch Deinstallationssoftware wie der TuneUp Uninstall Manager, der Revo Uninstaller oder ähnliche Lösungen zum Einsatz. Fortgeschrittene Nutzer schalten einzelne, bei den Erweiterungspunkten EP registrierte Einträge manuell aus, beispielsweise über das Systemkonfigurationsprogramm ("msconfig"), den Punkt "Dienste" in der Systemsteuerung oder den Punkt "Geplante Tasks" oder "Aufgabenplanung" (je nach Windows-Version) in der Systemsteuerung von Microsoft Windows. Auch dazu können Tools wie "Sysinternals Autoruns" oder "Windows Defender" zum Einsatz kommen. Ein weiteres Beispiel eines solchen Tools wird in "Anonymus: Ashampoo StartUp Tuner 2.0", 6. Juni 2007 (2007-06-06), Seiten 1-2, XP 002609498 und "Anonymus: Ashampoo Startup Tuner 2", 5. Juni 2007 (2007-06-05), Seiten 1-3, XP002609499 beschrieben. Manche handelsübliche Softwaretools erlauben es, Software, die von den meisten Benutzern nicht benötigt wird und die auf einer Liste bekannter Einträge aufgeführt ist, bei den Erweiterungspunkten EP auszuschalten. Dies wird beispielsweise durch die Software "TuneUp Systemstart und Herunterfahren optimieren" geleistet.

Nachteilig bei den genannten Lösungen ist, dass ein Nutzereingriff notwendig ist. Unerfahrene Benutzer können das System durch fehlerhafte Einstellungen instabil oder unbrauchbar werden lassen.

Es ist Aufgabe der vorliegenden Erfindung, Systemressourcen eines Computersystems unter dem Betriebssystem Windows ab Version XP freizugeben und so die vom Nutzer wahrgenommene Performance zu erhöhen, indem Programme, die der Nutzer im aktuellen Betriebszustand nicht benötigt, deaktiviert bzw. bei Bedarf reaktiviert werden.

Erfindungsgemäß wird diese Aufgabe mit einem Verfahren nach Anspruch 1 gelöst. Bevorzugte Ausführungsformen des Verfahrens sind in den rückbezogenen Unteransprüchen dargestellt.

Die "Deaktivierung" eines Programms bedeutet, alle Hintergrund-Funktionalitäten dieses Pro gramms zu beenden und danach alle diesem Programm zugeordneten Einträge bei den Erweiterungspunkten EP zu entfernen oder so zu verändern, dass sie vom Betriebssystem nicht mehr beachtet werden.

Die "Reaktivierung" eines Programms bedeutet, den Ausgangszustand aller zu diesem Programm zugeordneten Einträge bei den Erweiterungspunkten EP wieder herzustellen, so, als wäre es nie deaktiviert worden, und alle erforderlichen Hintergrundfunktionalitäten wieder zu starten.

Wenn im Folgenden beschrieben wird, dass Listen zusammengestellt oder ermittelt oder Vergleiche durchgeführt werden oder ähnliche Verarbeitungsschritte genannt werden, so impliziert dies, dass die Ergebnisse (auch Teilergebnisse) dieser Schritte abgespeichert oder in sonstiger Weise einer Weiterverarbeitung zur Verfügung gestellt werden.

Das Verfahren zur Performanceverbesserung von Computern durch die Freigabe von Computerressourcen weist die folgenden Schritte auf:
a. Ermittlung einer Liste P der Programme, die auf dem System installiert sind
b. Durchsuchung aller relevanten Erweiterungspunkte EP des Systems nach dort registrierten Einträgen
c. Erstellen einer Liste A der automatisch startenden Programme durch die Zuordnung der gefundenen Einträge an den Erweiterungspunkten EP zu den jeweiligen installierten Programmen
d. Vergleich der Liste A der automatisch startenden Programme mit einer Liste S systemnotwendiger Programme und einer Liste V der vom Benutzer verwendeten Programme
e. Deaktivierung von Programmen, die nicht systemnotwendig sind und für längere Zeit nicht verwendet wurden und Freigabe der von diesen Programmen genutzten Ressourcen.

### Zu a.

Zur Ermittlung einer Liste P aller Programme, die auf dem System installiert sind, wird vorteilhaft die vom Windows-Betriebssystem zur Verfügung gestellte Liste installierter Programme genutzt. Alternativ oder zusätzlich ist auch die Erfassung der installierten Programme anhand der Deinstallationsinformationen möglich, die sich im Windows-Systemverzeichnis befinden.

### Zu b.

Die Durchsuchung aller relevanten Erweiterungspunkte EP des Systems nach dort registrierten Einträgen umfasst bevorzugt den Autostart-Abschnitt in der Windows-Registrierungsdatenbank, den Autostart-Ordner im Startmenü, die Windows-Dienste, und die Funktion "Geplante Tasks" der Systemsteuerung. Es werden nicht nur die Einträge erfasst, die während des Bootvorganges abgearbeitet werden, sondern auch die Einträge, die während der Laufzeit des Systems abgearbeitet werden (z.B. ereignis- oder zeitgesteuerte Einträge). Eine Liste der relevanten Erweiterungspunkte EP wird dem Verfahren mitgegeben und auf Grundlage der aktuell vorgefundenen Windowsversion ausgewählt.

### Zu c.

Die Kombination beider Informationsquellen erfolgt durch die Zuordnung der gefundenen Einträge an den Erweiterungspunkten EP zu den jeweiligen installierten Programmen der Liste P, bevorzugt durch das Abfragen der lokalen Windows Installer-Datenbank, das Auslesen der Uninstall-Schlüssel der Windows-Registrierungsdatenbank und/oder die Untersuchung der Ver sionsinformations-Blöcke aller relevanten ausführbaren Dateien nach Produkt- und Herstellernamen. Im Ergebnis entsteht eine Liste A automatisch startender Programme. Bei den automatisch startenden Programmen kann es sich um Programme handeln, die ereignis- und/oder zeitgesteuert starten.

### Zu d.

Die Identifizierung von Programmen, die für die ordnungsgemäße und sichere Funktion des Systems erforderlich sind, z.B. von Sicherheitsprogrammen, von zur Verwendung der Hardware benötigten Programmen (Treiber) etc. erfolgt mittels einer Liste S, in der bekannte Programme dieser Kategorie aufgeführt sind. Diese Liste S wird dem Verfahren innerhalb seiner programmtechnischen Realisierung zur Verfügung gestellt. Darüber hinaus werden Abhängigkeitsinformationen aus dem System extrahiert und die entsprechenden Programme der Liste S hinzugefügt. Derartige Informationen finden sich beispielsweise in den Informationen zu installierten Diensten, in denen auch angegeben ist, welche weiteren Dienste von einem bestimmten Dienst abhängen bzw. von welchen anderen Diensten dieser bestimmte Dienst seinerseits abhängig ist.

Es erfolgt vorteilhaft auch eine Identifizierung von Programmen, die innerhalb einer bestimmten Anzahl von Computer-Nutzungstagen verwendet wurden. Sie werden vorteilhaft in die Liste V aufgenommen und vor einer ungewollten Deaktivierung geschützt. Die Definition, ab wann ein Programm als "verwendet" gilt, ergibt sich bevorzugt daraus, ob das Programm für einen signifikanten Anteil der Zeit, in der der Benutzer das System verwendet hat, auf dem Bildschirm sichtbar war - und/oder - ob mindestens eine relevante Nutzerinteraktion mit dem Programm erfolgte (z.B. Eingaben des Benutzers im Programm mit der Tastatur oder der Maus). Ein weiteres Kriterium kann die Interaktion eines Programmes mit anderen Programmen sein. Die Vorgabe, ab welcher Nutzungsdauer ein Programm als "verwendet" anzusehen ist, kann vorteilhaft auch durch den Nutzer erfolgen.

### Zu e.

Es wird nun dem Nutzer, oder per Voreinstellung auch automatisch, ermöglicht, eine "Deaktivierung" oder "Reaktivierung" eines installierten Programms vorzunehmen, um die durch das Programm verursachte Leistungsbeeinträchtigung des Systems kontrollieren zu können, ohne es deinstallieren zu müssen

In einer bevorzugten Ausführungsform erfolgt eine Visualisierung der Auswirkungen auf die Systemleistung, die eine Deaktivierung der einzelnen Programme hätte, die bei den Erweiterungspunkten EP registriert sind. Berücksichtigt werden dabei vorteilhaft die Auswirkungen auf den Systemstart, das laufende System und das Herunterfahren.

Diese Auswirkungen können sowohl kumuliert, als auch einzeln für jedes Programm dargestellt werden, um die Vorteile der Deaktivierung von Programmen sichtbar und leicht verständlich zu machen. Optional erfolgt dabei eine Gruppierung von Programm-Kollektionen, die bei der Installation mehrere Einträge in der Liste der installierten Programme erzeugen, zu einer logischen Einheit.

Vorteilhaft erfolgt eine automatische Reaktivierung eines deaktivierten Programms, wenn der Benutzer es auszuführen versucht, um die Auslösung von Selbstreparatur-Routinen oder Fehlermeldungen zu vermeiden. So könnte ansonsten beispielsweise eine Fehlermeldung erscheinen, wenn ein erforderlicher Dienst deaktiviert wurde oder nicht gefunden werden kann.

In einer bevorzugten Ausführungsform erfolgt die automatische Reaktivierung eines deaktivierten Programms, wenn der Benutzer es zu deinstallieren versucht, um Fehler während der Deinstallation oder nicht entfernte Dateien des Programms zu vermeiden.

In einer weiteren bevorzugten Ausführungsform erfolgt eine automatische Reaktivierung des Programms, wenn eine Programmfunktionalität über einen Erweiterungspunkt EP angesprochen wird. Dazu werden die Erweiterungspunkte EP überwacht. Dies erfolgt vorteilhaft, indem an den Erweiterungspunkten EP unter den Namen der ursprünglichen Einträge der Programme Routinen registriert werden, die eine Reaktivierung der deaktivierten Programme vornehmen und in der Zwischenzeit eventuell zu übergebende Parameter zwischenspeichern und diese nach erfolgter Reaktivierung an das Programm weitergeben.

In einer bevorzugten Ausführungsform erfolgt eine Ausführung des erfindungsgemäßen Verfahrens automatisch ohne das Eingreifen des Nutzers. So kann das System auch ohne ein manuelles Eingreifen des Benutzers dauerhaft bei optimaler Leistung gehalten werden.

Vorteilhaft wird dazu die Performance des Computersystems über den Nutzungszeitraum hinweg regelmäßig ermittelt und bei Vorliegen einer Performanceabsenkung um einen bestimmten Wert automatisch die Ausführung des Verfahrens veranlasst. Als vom Nutzer erkennbare Performanceveränderung wird allgemein ein Wert von ca. 10% angesehen. Somit wird bevorzugt beim Erreichen einer Performancereduktion um diesen Wert das Verfahren ausgeführt.

Optional wird dem Benutzer angeboten, eine Ausschlussliste von Programmen zu definieren, die nie deaktiviert werden sollen. Vorteilhaft sind hier alle Programme, die für die ordnungsgemäße und sichere Funktion des Systems erforderlich sind, bereits inkludiert und von einer Deaktivierung ausgeschlossen.

Vorteilhaft erfolgt auch eine regelmäßige und/oder automatische Prüfung, ob alle nachfolgenden Kriterien für eines oder mehrere der installierten Programme erfüllt sind:
i. Das Programm wurde seit einer bestimmten Anzahl von PC-Nutzungstagen nicht verwendet.
ii. Das Programm ist nicht für die ordnungsgemäße und sichere Funktion des Systems erforderlich.
iii. Das Programm steht nicht auf der optionalen benutzerdefinierten Liste von Programmen, die nie deaktiviert werden sollen.

Es erfolgt dann eine automatische Deaktivierung aller Programme, auf die diese Kriterien zutreffen. In einer bevorzugten Ausführungsform erfolgt eine Benachrichtigung des Benutzers über diese Aktion. Vorteilhaft ist die Angabe, welche Programme zu Deaktivieren oder zu Reaktivieren sind, an das Nutzerprofil gekoppelt, so dass unterschiedliches Nutzerverhalten bzw. unterschiedliche Arbeitsaufgaben verschiedener Nutzer berücksichtigt werden.

Vorteilhaft wird das Programm, das das erfindungsgemäße Verfahren umsetzt, mit dem Systemstart geladen und ausgeführt und bleibt zumindest im Hintergrund bis zum Herunterfahren des Systems aktiv. Interaktionen mit dem Benutzer können auf dessen Anforderung, aufgrund von Systemereignissen (beispielsweise Nachfrage, ob ein Programm deaktiviert oder reaktiviert werden soll) oder aufgrund zeitgesteuerter Aktionen (beispielsweise regelmäßige Systempflege) ausgelöst werden.

Durch das erfindungsgemäße Verfahren bleibt die gesamte Systemleistung eines Computers über längere Zeit hoch. Die Verarbeitungsgeschwindigkeit des Systems ist höher. Durch die Freigabe des Hauptspeicherplatzes, den ansonsten Hintergrundprogramme belegen würden, ist es möglich, den tatsächlich genutzten Programmen mehr Speicher zur Verfügung zu stellen. Dadurch, dass Programme nicht geladen werden, wird diesen Programmen vom Rechenzeitverteilungsdienst (Scheduler) auch keine Rechenzeit zugeteilt, was zu einer beschleunigten Ausführung der tatsächlich genutzten Programme führt. Der Ausbau oder der Ersatz der Hardwareausrüstung kann so zumindest zeitlich hinausgeschoben werden. Der Nutzer ist nicht gezwungen, Programme zu deinstallieren, sobald diese nicht mehr unmittelbar benötigt wer den. Die sonst dabei auftretenden Probleme, wie beispielsweise unvollständige Deinstallation oder unbeabsichtigte Deinstallation noch benötigter Programme, werden so vermieden. Auch die Neuinstallation des Betriebssystems kann so obsolet werden. Durch die automatische Auswahl von zur Deaktivierung geeigneten Programmen muss der Nutzer nicht selbst entscheiden, welche an verschiedenen Erweiterungspunkten EP vorhandenen Einträge zu deaktivieren oder zu löschen sind. Es können somit auch weniger erfahrene Nutzer die Leistung ihres Computersystems optimieren. Durch die Überwachung der Einträge an den Erweiterungspunkten EP und die automatische Reaktivierung der Einträge werden dem Nutzer Fehlermeldungen aufgrund deaktivierter Einträge erspart. Besonders vorteilhaft ist der adaptive Charakter des Verfahrens, der darin besteht, dass die Programme, die ein bestimmter Nutzer nicht benötigt, deaktiviert werden. Vorteilhaft werden diese Angaben mit dem Benutzerprofil des Systems verknüpft, so dass je nach Nutzer der entsprechende Satz an Programmen deaktiviert bzw. aktiviert wird. Vorteilhaft werden Deaktivierungen von automatisch startenden Programmen, deren Architektur dies gestattet, sofort wirksam. Die von diesen Programmen genutzten Ressourcen werden sofort auch ohne Neustart des gesamten Systems freigegeben.

## Patentansprüche

1. Verfahren zur Performanceverbesserung von Computern durch die Freigabe von Computerressourcen, mittels der folgenden Schritte, die automatisch ausgeführt werden:
a. Ermittlung einer Liste P der Programme, die auf dem System installiert sind
b. Durchsuchung aller relevanten Erweiterungspunkte EP des Systems nach dort registrierten Einträgen, wobei eine Liste der relevanten Erweiterungspunkte dem Verfahren mitgegeben wird,
c. Erstellen einer Liste A der automatisch startenden Programme durch die Zuordnung der gefundenen Einträge an den relevanten Erweiterungspunkten EP zu den jeweiligen installierten Programmen
d. Vergleich der Liste A der automatisch startenden Programme mit einer Liste S systemnotwendiger Programme und einer Liste V verwendeter Programme
e. Deaktivierung von Programmen, die nicht systemnotwendig sind und nicht verwendet wurden und Freigabe der von diesen Programmen genutzten Ressourcen Hauptspeicherplatz und Rechenzeit, und nachfolgende Überwachung der Erweiterungspunkte der deaktivierten Programme auf Anforderungen, die an diese Programme gerichtet sind sowie automatische Reaktivierung der deaktivierten Programme beim Eintreffen von Anforderungen an diese Programme.

2. Verfahren nach Anspruch 1, **dadurch gekennzeichnet, dass** die Liste P der auf dem System installierten Programme vom Betriebssystem abgefragt und/oder aus den Deinstallationsinformationen ermittelt wird.

3. Verfahren nach Anspruch 1 oder 2, **dadurch gekennzeichnet, dass** als relevante Erweiterungspunkte EP einzelne oder alle der folgenden Erweiterungspunkte EP durchsucht werden:
a. der Autostart-Abschnitt in der Windows-Registrierungsdatenbank,
b. die Autostart-Ordner im Startmenü,
c. die Windows-Dienste,
d. die Funktion "Geplante Tasks" der Systemsteuerung.

4. Verfahren nach einem der vorhergehenden Ansprüche, **dadurch gekennzeichnet, dass** die Zuordnung der gefundenen Einträge an den relevanten Erweiterungspunkten EP zu den jeweiligen installierten Programmen aufgrund von Abfragen der lokalen Windows Installer-Datenbank und/oder das Auslesen der Uninstall-Schlüssel der Windows-Registrierungsdatenbank und/oder die Untersuchung der Versionsinformations-Blöcke aller relevanten ausführbaren Dateien nach Produkt- und Herstellernamen erfolgt.

5. Verfahren nach einem der vorhergehenden Ansprüche, **dadurch gekennzeichnet, dass** die Liste S systemnotwendiger Programme dem Verfahren vorgegeben und weitere Abhängigkeitsinformationen aus dem System extrahiert und der Liste S hinzugefügt werden.

6. Verfahren nach einem der vorhergehenden Ansprüche, **dadurch gekennzeichnet, dass** der Nutzer die Deaktivierung oder eine Reaktivierung eines Programms veranlasst.

7. Verfahren nach einem der vorhergehenden Ansprüche, **dadurch gekennzeichnet, dass** dem Nutzer visualisierte Informationen zu den Auswirkungen der Deaktivierung oder einer Reaktivierung eines Programms bereitgestellt werden.

8. Verfahren nach Anspruch 1, **dadurch gekennzeichnet, dass** ein Programm vor einer Deinstallation reaktiviert wird.

9. Verfahren nach Anspruch 1, **dadurch gekennzeichnet, dass** Parameter, die an ein deaktiviertes Programm zu übergeben sind, bis zur Reaktivierung zwischengespeichert werden.

10. verfahren nach Anspruch 1, **dadurch gekennzeichnet, dass** Programme deaktiviert werden, die
a. seit einer vorgegebenen Anzahl von Nutzungstagen nicht verwendet wurden und
b. nicht für die ordnungsgemäße und sichere Funktion des Systems erforderlich sind und
c. nicht auf einer benutzerdefinierten Liste von Programmen, die nie deaktiviert werden sollen, aufgeführt sind.

11. Verfahren nach einem der vorhergehenden Ansprüche, **dadurch gekennzeichnet, dass** ein Programm, das das Verfahren steuert, während der gesamten Betriebsdauer des Computers aktiv ist.

12. Verfahren nach Anspruch 11, **dadurch gekennzeichnet, dass** das Programm, das das Verfahren steuert, beim Start des Computers automatisch geladen und beim Herunterfahren des Computers automatisch beendet wird.

13. Verfahren nach einem der Ansprüche 1 oder 10, **dadurch gekennzeichnet, dass** aufgrund der Angaben im Benutzerprofil des Systems, je nach Nutzer der entsprechende Satz an Programmen deaktiviert bzw. aktiviert wird.

## Claims

1. A method for improving the performance of a computer system by releasing computer resources, the method comprising the following steps which are executed automatically:
a) determining a list P of programs installed on a computer system;
b) searching all relevant extension points EP of the computer system for registered entries, whereas a list of the relevant extension points is provided to the method;
c) generating a list A of automatically starting programs by assigning the registered entries at the relevant extension points EP to the installed programs, respectively;
d) comparing the list A of the automatically starting programs with a list S of system-required programs and a list V of used programs;
e) deactivating programs that are not system-required and programs that have not been used and releasing the computer resources main memory and processing time that have been used by the deactivated programs and subsequently monitoring the extension points EP of a deactivated programs in order to detect requests addressed to the deactivated programs and reactivating the deactivated programs automatically when a request addressed to the programs has been detected.

2. The method according to claim 1, wherein the list P of the installed programs is determined by querying the operating system and/or is determined based on uninstall information.

3. The method according to claim 1 or claim 2, wherein as relevant extension points EP individual ones or all of the following extension points EP are searched:
a. the auto start section of the Windows® registry;
b. auto start folders in the start menu;
c. Windows® services;
d. the function "scheduled tasks" of the control panel.

4. The method according to one of the preceding claims, wherein allocating the registered entries to the relevant extension points EP is realized based on querying local Windows® installer databases and/or readout of uninstall keys of the Windows® registry and/or querying version information blocks of all relevant executable files according to product name and manufacturer's name.

5. The method according to one of the preceding claims, wherein the list S of system-required programs is a default setting and additional dependency information are extracted from of the computer system and are added to the list S.

6. The method according to one of the preceding claims, wherein initiating deactivation or reactivation of a program is done by a user.

7. The method according to one of the preceding claims, **characterized in that** visualized information in regard to effects of the deactivation or the reactivation of a program are provided to the user.

8. The method according to claim 1, **characterized in that** that a program is reactivated before performing an uninstall function.

9. The method according to claim 1, **characterized in that** that parameters that are to be passed to a deactivated program are cached until the program is reactivated.

10. The method according to claim 1, **characterized in that** that programs are deactivated when:
- for a given number of days of utilization the programs have not been used; and
- the programs are not required for a proper and safe function of the computer system; and
- the programs are not on a list, defined by the user, of programs not to be deactivated.

11. The method according to one of the preceding claims, **characterized in that** that a program that executes the method is running during an entire operation period of the computer system.

12. The method according to one of the preceding claims, **characterized in that** the program that executes the method is loaded automatically when starting up the computer system and is automatically terminated when shutting down the computer system.

13. The method according to claim 1 or claim 10, **characterized in that** that based on the user profile of the system, depending on the user, the appropriate set of programs is deactivated or activated.

## Revendications

1. Procédé d'amélioration de la performance d'ordinateurs par la libération de ressources de l'ordinateur au moyen des étapes suivantes, qui sont exécutées automatiquement :
a. détermination d'une liste P des programmes qui sont installés sur le système,
b. parcours de tous les points d'extension EP pertinents du système pour rechercher les entrées qui y sont enregistrées, une liste des points d'extension pertinents étant transmise au procédé,
c. création d'une liste A des programmes qui démarrent automatiquement par affectation des entrées trouvées aux points d'extension EP pertinents aux programmes installés respectifs,
d. comparaison de la liste A des programmes qui démarrent automatiquement avec une liste S de programmes indispensables au système et une liste V de programmes utilisés,
e. désactivation des programmes qui ne sont pas indispensables au système et qui n'ont pas été utilisés et libération des ressources d'occupation de mémoire principale et de temps de calcul utilisées par ces programmes, et surveillance consécutive des points d'extension des programmes désactivés en ce qui concerne les demandes qui sont adressées à ces programmes ainsi que réactivation automatique des programmes désactivés en cas d'arrivée de demandes adressées à ces programmes.

2. Procédé selon la revendication 1, **caractérisé en ce que** la liste P des programmes installés sur le système est obtenue par interrogation du système d'exploitation et/ou déterminée à partir des informations de désinstallation.

3. Procédé selon la revendication 1 ou 2, **caractérisé en ce que** sont parcourus en tant que points d'extension EP pertinents certains ou tous des points d'extension EP suivants :
a. la section Autostart de la base de registre Windows,
b. le dossier Démarrage du menu de démarrage,
c. les services Windows,
d. la fonction « Tâches planifiées » du Panneau de configuration.

4. Procédé selon une des revendications précédentes, **caractérisé en ce que** l'affectation des entrées trouvées aux points d'extension EP pertinents aux programmes installés respectifs est réalisée sur la base d'interrogations de la base de données d'installation Windows locale et/ou de la lecture des clés de désinstallation de la base de registre Windows et/ou de l'analyse du nom du produit et du fabricant dans les blocs d'information de version de tous les fichiers exécutables pertinents.

5. Procédé selon une des revendications précédentes, **caractérisé en ce que** la liste S de programmes indispensables au système est prescrite au procédé et d'autres informations de dépendance sont extraites du système et ajoutées à la liste S.

6. Procédé selon une des revendications précédentes, **caractérisé en ce que** l'utilisateur procède à la désactivation ou à la réactivation d'un programme.

7. Procédé selon une des revendications précédentes, **caractérisé en ce que** des informations visualisées sur les conséquences de la désactivation ou de la réactivation d'un programme sont mises à la disposition de l'utilisateur.

8. Procédé selon la revendication 1, **caractérisé en ce qu'**un programme est réactivé avant une désinstallation.

9. Procédé selon la revendication 1, **caractérisé en ce que** les paramètres à transmettre à un programme désactivé sont stockés jusqu'à la réactivation.

10. Procédé selon la revendication 1, **caractérisé en ce que** sont désactivés les programmes qui
a. n'ont pas été utilisés depuis un nombre prédéfini de jours et
b. ne sont pas nécessaires au fonctionnement correct et sûr du système et
c. ne figurent pas dans une liste de programmes à ne jamais désactiver définie par l'utilisateur.

11. Procédé selon une des revendications précédentes, **caractérisé en ce qu'**un programme qui commande le procédé est actif pendant toute la durée de fonctionnement de l'ordinateur.

12. Procédé selon la revendication 11, **caractérisé en ce que** le programme qui commande le procédé est chargé automatiquement au démarrage de l'ordinateur et se termine automatiquement lorsque l'ordinateur est arrêté.

13. Procédé selon une des revendications 1 ou 10, **caractérisé en ce qu'**un jeu de programmes correspondant à l'utilisateur est désactivé ou activé sur la base des informations contenues dans le profil d'utilisateur du système.
